# EUROPEAN PATENT SPECIFICATION

(11) **EP 1 578 058 B1**
(45) Date of publication and mention of the grant of the patent: **12.10.2011**
(21) Application number: 04006617.7
(22) Date of filing: 19.03.2004
(51) Int. Cl.: H04L 12/24

(54) **Distributing unique identifiers within a network**
Verteilen von eindeutigen Kennzeichnern im Rahmen von einem Netzwerk
Distribution des identificateurs uniques au sein d'un réseau

(43) Date of publication of application: 21.09.2005
(73) Proprietor: SAP AG, 69190 Walldorf (DE)
(72) Inventor: Markert, Frank, 74909 Meckesheim (DE)
(74) Representative: Müller-Boré & Partner Patentanwälte

(56) References cited:
- US-A1- 2004 003 058
- US-B1- 6 233 611
- US-B1- 6 360 260

## Description

### FIELD OF THE INVENTION

The present invention relates to a method for distributing unique service identifiers within a network, wherein at least two of said services communicate with each other using communication interfaces provided by a network, and wherein each of said services comprises a unique identifier identifying said service within said network.

The invention also relates to a system for distributing unique identifiers of its services, comprising a first service comprising a first unique identifier, a second service comprising a second unique identifier, a network providing communication functionality and connecting said first service with said second service.

The invention further relates to a computer program and a computer program product for distributing unique identifiers of services within a network, said program comprising instructions operable to cause processors to communicate with each other using communication interfaces provided by a network, and identifies said services within said network using a unique identifier.

Eventually, the invention relates to a plurality of computers being installed to distribute unique identifiers of services within a network, each of said at least two computers running a service, wherein at least two of said services communicate with each other using communication interfaces provided by a network, and wherein each of said services comprises a unique identifier identifying said service within said network.

### BACKGROUND

In current distributed systems, services running on distributed computers need to be configured in order to be able to communicate with other services on a network. In particular for applications, where a central software component is required, configuration files of the respective distributed services have to store the location of the central software component. By using the location of the central software component, the services may access the central software component and may request from the central software component information about other services. This may be, for instance, necessary in use cases where as fast access to data is necessary, in particular when search engines carry out searches on various services.

However, configuring the layout of configuration files of software components within distributed environments has to be planned beforehand. The configuration files must contain all information about the distributed services to allow a flawless inter-communication. In particular in dynamically changing environments, such as with blade server technology, services and computers may relocate, e.g. their address may change. This results in lack of access to these services. Routing information for exchanging messages between the services has to be reconfigured. This means that the configuration files of the respective services have to be modified manually or by a dedicated program, running on each of the services.

Furthermore, in case of failures of certain services, the configuration files may become corrupt. In such a case, it might be helpful to allow configuring the configuration files in real time, to allow services to access central software components, and to provide their service to the network. Failure management up-to-date needs reconfiguration of the configuration files in case services become corrupt.

Document US 2004/0003058 discloses a method for registering a device and its service capabilities with a service discovery agent.

Moreover, in blade server technology, it is not possible to predict the workload of certain services. In case of work overload, new blade servers are attached to the network, which provide the respective services. The environmental structure may thus change rapidly. New servers and services are added to the network on demand, and in case the workload decreases, are de-installed from the network as well. This dynamic change in the environment causes constrains with respect to the configuration of the respective services.

### SUMMARY

To overcome these drawbacks, the invention proposes a method for distributing unique service identifiers within a network, wherein at least two of said services communicate with each other using communication interfaces provided by a network, and wherein each of said services comprises a unique identifier identifying said service within said network, with the steps of starting a first service, broadcasting an announcement message by said first service into said network, receiving said announcement message by at least a second service, and confirming reception of said announcement message by said second service to said first service.

Using this method, it will be possible to provide configuration of new services by distributing their unique identifiers automatically without user interaction. Reconfiguration of configuration files at run time, in case the environment layout changes will become unnecessary. In particular in distributed system, where it is required to know the location of other software components, such as R/3 message server technology, name server technology, search engines and other distributed systems, the inventive method provides fast and easy access to the respective services.

A service, such as a program, a controller, a process or a computer, may run on only one unit, such as a blade or a printed circuit board. Each of the services has a unique identifier, allowing to identify this service within the network. The unique identifier may be a number, a string or any other value able to determine the service from others. The services may already be installed and ready to run locally on the respective computers. The operating system of the computers provides communication functionality, so as to allow the services to communicate with each other. Network functionality and network interfaces are already provided to the services and may be used by the services.

The inventive method proposes to register new services at a second service after a first service is started. Therefore, during start-up of the first service, an announcement message is broadcast into the network. By broadcasting the announcement message, the first service announces that it is available. Within the network, a second service may be installed to listen to these announcement messages. These services may receive the announcement message, read the data comprised within the announcement message and confirm reception of the announcement message. This confirmation is received by the first service. After reception, the first service knows that it is registered at the second service. It may then also access the second service to request information about further third services. The second service may provide different services with information about all available service, as the available services have been registered to the second service.

To provide a hierarchy within the network, and to avoid collisions concerning tasks of different services, it is proposed that said first service acts as a distributed software component and said second service acts as a central software component. Said central software component may store information about each distributed software component. Distributed software components may communicate with each other, but do not provide configuration tasks. The central software component provides configuration tasks, in particular listening to announcement messages and confirming reception of these.

It is further preferred that said first service broadcasts within said announcement message its unique identifier, enabling said second service to address said first service directly. The unique identifier allows addressing said first service directly. After receiving the announcement message, the second service may extract the unique identifier and store it together with further information concerning the first service. Confirming reception of said announcement message may be done using the unique identifier, e.g. addressing the first service with this identifier. This allows contacting the first service directly. After that, further services may request the address of the first service from the second service, whereupon the second service provides the unique identifier to the further services. These may then address the first service directly using the unique identifier.

It is also preferred that said second service confirms reception of said announcement message to said first service by establishing a communication channel between said first and said second service. The communication channel may be a direct communication line between the services. Using the communication channel is preferred, as this reduces network traffic.

It may also be preferred that said second service confirms reception of said announcement message to said first service by sending a network message from said second service to said first service. A network message may be according to a known network communication protocol.

To allow said first service to communicate with the second service directly for further needs, in particular for requesting information about other available services, it is proposed that said second service provides said first service with its unique identifier while confirming said reception of said announcement message. During the confirmation, the second service may include its own unique identifier into the confirmation. The first service thus knows the address of the second service and may address messages directly to the second service.

In order to allow dynamic configuration, each service needs to have a unique identifier. Therefore, it is proposed that said unique identifier is assigned to said first and said second service during start-up of said services, prior to broadcasting said announcement message.

This means that the operating system of the respective services already provides means to attain unique identifiers. These may be static or dynamic unique identifiers, provided by a particular instance of the network. This may be a DHPC server, located within the network.

To provide an information service concerning all available services, it is proposed that said second service maintains a list of all available distributed software components. This means that the second service stores the unique identifier of each of the registered first services. These first services may run distributed software components. In case the second service acts as a central software component, it may be requested to provide information about distributed software components, in particular about services and their addresses. For this reason the second service may maintain the list of available distributed software components.

In particular for fast data access, for instance for search engines, a first service may request a unique identifier for a third service from said second service. In case the first service runs a search engine, it might be necessary to request particular information from a distributed software component running on a third service. To address the third service directly, the first service may request the second service to provide the unique identifier of the third service. The second service provides this information to the first service, which allows the first service to address the third service directly.

In particular in changing environments, addresses of services may change due to relocation of these services.

This may happen in case the respective computers are detached and again attached to the network, such as when a blade server is removed from or added to the network.

It may also happen that software components go off-line and after while restart again. This might happened in case of failures. In such a case, the software components and the respective services might be assigned a new unique identifier. To account for this change, it is proposed that said first service monitors accessibility of said second service and that said first service broadcasts an announcement message in case said second service is not available through its initial address. In such a case, the central software component running on the second service might be relocated or encountered a failures. In this case the second service might not be available through its initial address anymore. The first service running as distributed software component might then provide its address to the second service by broadcasting its announcement message again, putting the second service into knowledge of its address. On the other hand, by confirming reception of the announcement message, the second service may distribute its own, new unique identifier.

In case said second service is relocated, it is also preferred that said second service broadcasts a new unique identifier to inform said first service about the new location of said second service. Relocation or change of unique identifier of the second service may also be accounted for by broadcasting the unique identifier of the second service to all known first services. These may then address the second service by the new unique identifier.

In case a new network environment is established, it might happen that no service is running as central software component. In such a case, it might be useful that said first service listens for a confirmation message from said second service for a predetermined time, and after lapse of said predetermined time, said first service announces itself as central software component. By that lock-ups may be avoided. The first service only waits for the predetermined time for a reception confirmation. After that it may run itself as central software component, providing all further services with information about their respective locations.

It is preferred that said first service and said second service communicate using TCP/IP provided by said network. It is also preferred that said unique identifier is a TCP/IP address.

Providing the inventive method allows configuring computers and services within a network automatically without user interaction. The respective information is written into the respective files within the computers, so that these may access the respective other computers using the identifiers automatically, in particular in changing environments. Changes to the unique identifiers may be accounted for automatically. Manual changes of configuration files become obsolete. A central software component may maintain information about all available services and provide these upon request.

Another aspect of the invention is a system for distributing unique identifiers of its services, comprising a first service comprising a first unique identifier, a second service comprising a second unique identifier, a network providing communication functionality and connecting said first service with said second service, said first service providing means to broadcast an announcement message, and said second service providing means to receive said announcement message and to confirm receipt said announcement message to said first service.

A further aspect of the invention is a computer program for distributing unique identifiers of services within a network, said program comprising instructions operable to cause a processor to communicate with each other using communication interfaces provided by a network, and identifies said services within said network using a unique identifier, start a first service, broadcast an announcement message by said first service into said network, receive said announcement message by at least a second service, and confirm reception of said announcement message by said second service to said first service.

Yet further aspect of the invention is a computer program product comprising a computer program for distributing unique identifiers of services within a network, said services comprising instructions operable to cause a processor to communicate with each other using communication interfaces provided by a network, and identify said service within said network using a unique identifier, start a first service, broadcast an announcement message by said first service into said network, receive said announcement message by at least a second service, and confirm reception of said announcement message by said second service to said first service.

Eventually, a further aspect of the invention is a plurality of computers being installed to distribute unique identifiers of services within a network, each of said at least two computers running a service, wherein at least two of said services communicate with each other using communication interfaces provided by a network, and wherein each of said services comprises a unique identifier identifying said service within said network, with the steps of starting a first service on a first computer, broadcasting an announcement message by said first service into said network, receiving said announcement message by at least a second service of a second computer, and confirming reception of said announcement message by said second service to said first service.

Referring now to the drawings, in which like numerals represent like elements throughout the several figures, aspects of the present invention and the exemplary operating environment will be described.

### BRIEF DESCRIPTION OF THE DRAWINGS

In the drawings show:
- Fig. 1: a computer system;
- Fig. 2: a flowchart of an inventive method;
- Fig. 3: a further flowchart of an inventive method;
- Fig. 4: another flowchart of an inventive method;
- Fig. 5: a further flowchart.

### DETAILED DESCRIPTION

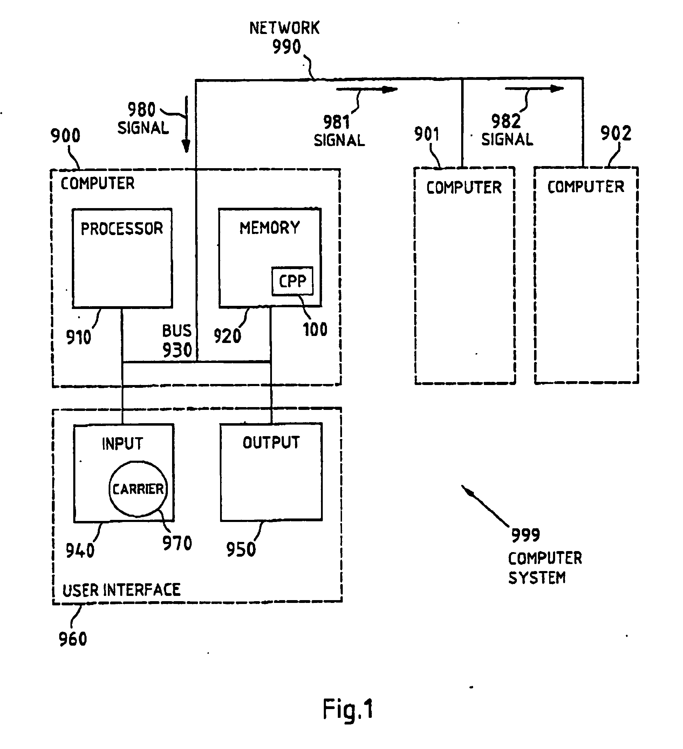

In FIGs. 1-5 reference numbers 100/200, 110/210 denote similar elements, the function of these elements can be different

Fig. 1 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980.
In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like. Processor 910 is, for example, a central processing unit (CPU), a micro-controller unit (MCU), digital signal processor (DSP), or the like.

Memory 920 is elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), a counter (e.g., a goods counter in a factory). Input device 940 can serve to read carrier 970.

Output device 950 presents instructions and data that have been processed. For example, this can be a monitor or a display, (cathode ray tube (CRT), flat panel display, liquid crystal display (LCD), speaker, printer, plotter, vibration alert device. Output device 950 can communicate with the user, but it can also communicate with further computers.

Input device 940 and output device 950 can be combined to a single device. Any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web WWW). Network 990 can be a wired or a wireless network. To name a few network implementations, network 990 can be, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

A variety of transmission protocols, data formats and conventions is known, for example, as transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

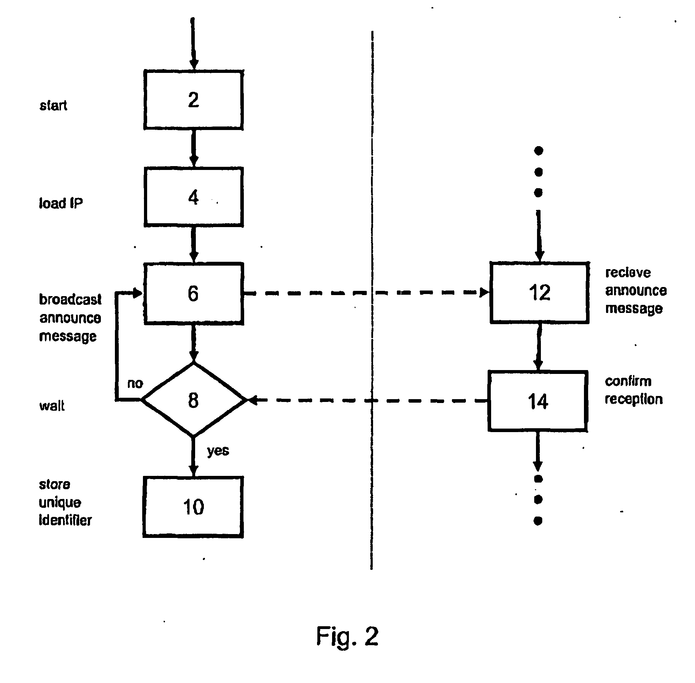

Figs. 2 to 4 depict flowcharts of an inventive method. Depicted are on either side of the vertical dashed line a first service and a second service respectively. The interactions between the services are depicted by dashed lines running from left to right and vice versa.

Initially, a first service is started in step 2. By that, the operating system of the underlying computer is booted. Necessary functionality to provide network access is loaded.

After that, an IP-address is assigned to the service running on the computer in step 4. After the IP-address has been assigned, the service broadcasts an announcement message into the network in step 6. The announcement message comprises information about the service, in particular its IP-address. Furthermore, the name of the service may be comprised.

A second service, already running and in a wait state depicted by the dots ... receives the announcement message in step 12. After reception of the announcement message, the IP-address of the announcing first service is extracted. A confirm message is generated and transmitted to the first service in step 14. The second service again changes into wait state, listening for new announcement messages.

After sending the announcement message in step 6, the first service changes into a wait state 8. The wait state 8 provides a wait cycle, e.g. a predetermined time the first service waits for an answer, which allows listening for a confirmation message for a predetermined time. In case no confirmation message is received, the announcement message is again broadcasted according to step 6.

In case the confirmation message is received, the first service leaves its wait state 8 and stores the received information in step 10. Within the received information, the IP-address of the second service is included, enabling the first service to access the second service directly. This information is stored in step 10. After that, the first service and the second service are dynamically configured to the new situation in the environment. Further services may announce themselves to the second service accordingly.

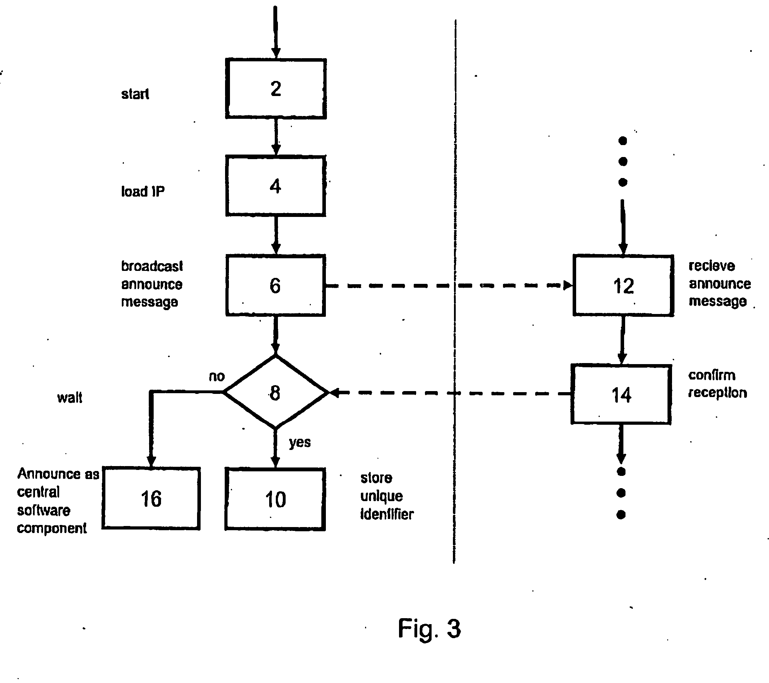

Fig. 3 depicts a similar flowchart as Fig. 2. Like reference number refer to like elements. After steps 2-6 have been carried out, the first service goes into wait state 8. In case the first service receives a confirmation message within a predetermined time, the first service stores the comprised information in step 10. However, it might happen that no second service answers the broadcast announcement message. In such a case, as depicted in Fig. 3, the first service may itself announce as central software component in step 16, and may act thereafter as central software component. This might be useful in case a new environment is set up. During initiation of the new environment no service is running as central software component. Therefore, lock-ups might be avoided when the first service, not receiving a confirmation message, announces itself as central software component. This service may then act as second service for all further, newly initiated services.

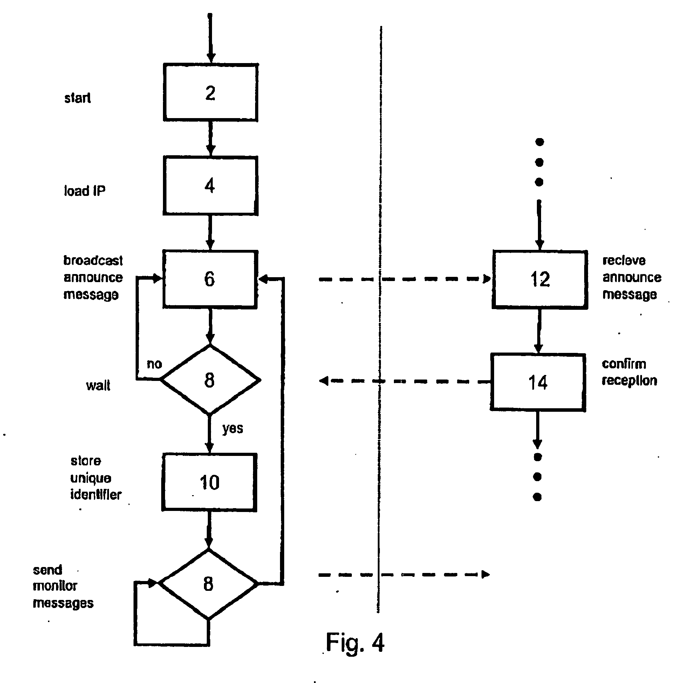

Fig. 4 depicts a similar method as depicted in Fig. 2. In addition, after step 10 a monitoring step 18 is depicted. During this monitoring step 18, monitoring messages are sent to the central software component, monitoring its availability. These monitoring messages are answered by the central software component to confirm its availability. In such a case, the monitoring state remains unchanged. However, in case a monitoring message is not answered within a predetermined time, the first service changes into a new state, where step 6 is again carried out. This means that a new announcement message is broadcast. In case the monitoring message is not answered by the central software component, the first service tries to contact any other central software component by broadcasting a new announcement message. After that, the method is the same as previously described .

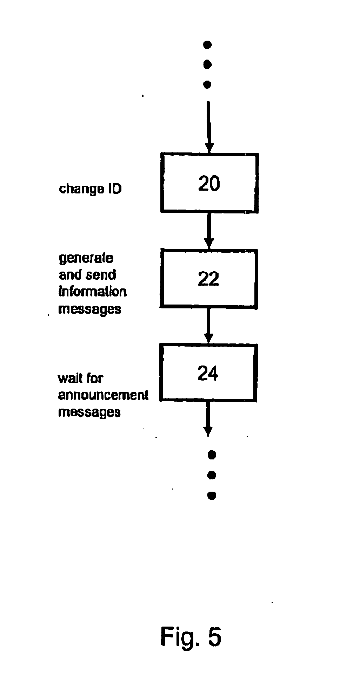

Fig. 5 depicts a central software component running as second service. In step 20, the central software component is relocated and changes its unique identifier. This results in lack of availability of this central software component by other services as they try to contact the central software component by its know unique identifier. To account for this, in step 22 messages are generated and sent to all known distributed software components, to announce the new unique identifier of the central software component. The distributed software components receive this message and store the new unique identifier to address the central software component using the new identifier. After that, the central software component changes into state 24, where it waits for any requests from distributed software components.

### REFERENCE NUMBERS

- 100: computer program product
- 900: computer
- 910: processor
- 920: memory
- 930: bus
- 940: input device
- 950: output device
- 960: user interface
- 970: program carrier
- 980: program signal
- 990: computer network
- 999: computer network system
- 2: start
- 4: load IP
- 6: broadcast announce message
- 8: wait
- 10: store unique identifier
- 12: receive announce message
- 14: confirm reception
- 16: announce as central software component
- 18: send monitor messages
- 20: change ID
- 22: generate and send information messages
- 24: wait for announce message

## Claims

1. A method for distributing unique service identifiers within a network, wherein at least two of said services communicate with each other using communication interfaces provided by a network, and
wherein each of said services comprises a unique identifier identifying said service within said network, with the steps of:
starting (2) a first service,
wherein said first service acts as a distributed software component,
broadcasting (6) an announcement message by said first service into said network,
receiving (12) said announcement message by at least a second service,
wherein said second service acts as a central software component, and
confirming reception (14) of said announcement message by said second service to said first service,
wherein said first service listens for said confirmation message from said second service for a predetermined time, and after lapse of said predetermined time, said first service announces itself as the central software component.

2. The method of claim 1, wherein said first service broadcasts within said announcement message its unique identifier, enabling said second service to address said first service directly.

3. The method of claim 1, wherein said second service confirms reception of said announcement message to said first service by establishing a communication channel between said first and said second service.

4. The method of claim 1, wherein said second service confirms reception of said announcement message to said first service by sending a network message from said second service to said first service.

5. The method of claim 1, wherein said second service provides said first service with its unique identifier while confirming said reception of said announcement message.

6. The method of claim 1, wherein said unique identifier is assigned to said first and said second service during start-up of said services, prior to broadcasting said announcement message.

7. The method of claim 1, wherein said second service maintains a list of all available distributed software components.

8. The method of claim 1, wherein a first service requests a unique identifier for a third service from said second service.

9. The method of claim 1, wherein said first service monitors accessibility of said second service and wherein said first service broadcasts an announcement message in case said second service is not available through its initial address.

10. The method of claim 1, wherein said second service broadcasts a new unique identifier to inform said first service, about the new location of said second service when said second service as relocated.

11. The method of claim 1, wherein said first service and said second service communicate using TCP/IP provided by said network.

12. The method of claim 11, wherein said unique identifier is a TCP/IP address.

13. A system (999) for distributing unique identifiers of its services, comprising
a first service comprising a first unique identifier,
a second service comprising a second unique identifier,
a network (990) providing communication functionality and connecting said first service with said second service,
wherein said first service acts as a distributed software component, and
wherein said second service acts as a central software component,
said first service providing means to broadcast an announcement message, and
said second service profiling means to receive said announcement message and to confirm receipt of said announcement message to said first service,
wherein said first service comprises means to listen for said confirmation message from said second service for a predetermined time, and after lapse of said predetermined time, said first service comprises means to announce itself as the central soft ware component.

14. A computer program for distributing unique identifiers of services within a network (990), said program comprising
instructions operable to case a processor (910) to allow services to communicate with each other using communication interfaces provided by a network (990), and to identify said services within said network (990) using a unique identifier,
start a first service,
wherein said first service acts as a distributed software component,
broadcast an announcement message by said first service into said network,
receive said announcement message by at least a second service,
wherein said second service acts as a central software component, and
confirm reception of said announcement message by said second service to said first service,
wherein said first service listens for said confirmation message from said second service for a predetermined time, and after lapse of said predetermined time, said first service announces itself as the central software component.

15. A computer program product (100) comprising the computer program for distributing unique identifiers of services within a network (990) according to claim 14.

16. The system (999) according to claim 13, comprising a plurality of computers (900, 901, 902) being installed to distribute unique said identifiers of services within the network (990), each of said at least two computers (900, 901, 902) running a service,
wherein at least two of said services communicate with each other using communication interfaces provided by a network (990), and
wherein each of said services comprises a unique identifier identifying said service within said network (990),
with the steps of:
starting a first service on a first computer (900),
wherein said first service acts as a distributed software component,
broadcasting an announcement message by said first service into said network. (990),
receiving said announcement message by at least a second service of a second computer (901, 902),
wherein said second service acts as a central software component, and
confirming reception of said announcement message by said second service to said first service, and
wherein said first service listens for said confirmation message from said second service for a predetermined time, and after lapse of said predetermined time, said first service announces itself as the central software component.

## Patentansprüche

1. Verfahren zur Verteilung eindeutiger Dienstkennungen innerhalb eines Netzwerks, wobei mindestens zwei der genannten Dienste unter Verwendung von Kommunikationsschnittstellen miteinander kommunizieren, die durch ein Netzwerk bereitgestellt werden, und wobei jeder der genannten Dienste eine eindeutige Kennung umfasst, der den Dienst innerhalb des genannten Netzwerks eindeutig identifiziert, mit den Verfahrensschritten:
Start (2) eines ersten Dienstes,
wobei der genannte erste Dienst als eine Komponente verteilter Software fungiert,
Übertragung (*broadcasting*) (6) einer Ankündigungsnachricht durch den genannten ersten Dienst im besagten Netzwerk,
Empfang (12) der genannten Ankündigungsnachricht durch mindestens einen zweiten Dienst,
wobei der genannte zweite Dienst als eine zentrale Softwarekomponente fungiert, und
Empfangsbestätigung (14) der genannten Ankündigungsnachricht durch den genannten zweiten Dienst für den genannten ersten Dienst,
wobei der genannte erste Dienst die genannte Bestätigungsnachricht vom genannten zweiten Dienst innerhalb einer vorbestimmten Zeitspanne erwartet, und nach Ablauf der genannten vorbestimmten Zeitspanne der genannte erste Dienst sich selbst als zentrale Softwarekomponente angibt.

2. Das Verfahren nach Anspruch 1, wobei der genannte erste Dienst innerhalb der genannten Ankündigungsnachricht seine eindeutige Kennung überträgt, was dem genannten zweiten Dienst erlaubt, den genannten ersten Dienst direkt zu adressieren.

3. Das Verfahren nach Anspruch 1, wobei der genannte zweite Dienst den Empfang der genannten Ankündigungsnachricht für den genannten ersten Dienst durch das Einrichten eines Kommunikationskanals zwischen dem genannten ersten und dem genannten zweiten Dienst bestätigt.

4. Das Verfahren nach Anspruch 1, wobei der genannte zweite Dienst den Empfang der genannten Ankündigungsnachricht für den genannten ersten Dienst durch das Senden einer Netzwerknachricht vom genannten zweiten Dienst zum genannten ersten Dienst bestätigt.

5. Das Verfahren nach Anspruch 1, wobei der genannte zweite Dienst den genannten ersten Dienst bei der Bestätigung des genannten Empfangs der genannten Ankündigungsnachricht mit seiner eindeutigen Kennung versorgt.

6. Das Verfahren nach Anspruch 1, wobei die genannte eindeutige Kennung dem genannten ersten Dienst und dem genannten zweiten Dienst bei der Inbetriebnahme der genannten Dienste, vor der Übertragung der genannten Ankündigungsnachricht zugewiesen wird.

7. Das Verfahren nach Anspruch 1, wobei der genannte zweite Dienst eine Liste von allen verfügbaren Komponenten der verteilten Software führt.

8. Das Verfahren nach Anspruch 1, wobei ein erster Dienst vom genannten zweiten Dienst für einen dritten Dienst eine eindeutige Kennung anfordert.

9. Das Verfahren nach Anspruch 1, wobei der genannte erste Dienst die Erreichbarkeit des genannten zweiten Dienstes überwacht und wobei der genannte erste Dienst eine Ankündigungsnachricht überträgt, wenn der genannte zweite Dienst bei seiner ursprünglichen Adresse nicht verfügbar ist.

10. Das Verfahren nach Anspruch 1, wobei der genannte zweite Dienst eine neue eindeutige Kennung überträgt, um den genannten ersten Dienst über den neuen Standort des genannten zweiten Dienstes zu informieren, wenn der genannte zweite Dienst umgesiedelt worden ist.

11. Das Verfahren nach Anspruch 1, wobei der genannte erste Dienst und der genannte zweite Dienst mittels TCP/IP kommunizieren, welches vom genannten Netzwerk bereitgestellt wird.

12. Das Verfahren nach Anspruch 11, wobei die genannte eindeutige Kennung eine TCP/IP-Adresse ist.

13. System (999) zur Verteilung eindeutiger Dienstkennungen seiner Dienste, welches folgendes umfasst:
einen ersten Dienst, der eine erste eindeutige Kennung umfasst,
einen zweiten Dienst, der eine zweite eindeutige Kennung umfasst,
ein Netzwerk (990), das Kommunikationsfunktionalität bereitstellt und das den genannten ersten Dienst und den genannten zweiten Dienst miteinander verbindet,
wobei der genannte erste Dienst als eine Komponente verteilter Software fungiert, und
wobei der genannte zweite Dienst als eine zentrale Softwarekomponente fungiert, und
der genannte erste Dienst Mittel zur Übertragung einer Ankündigungsnachricht bereitstellt, und
der genannte zweite Dienst Mittel zum Empfang der genannten Ankündigungsnachricht und zur Empfangsbestätigung der genannten Ankündigungsnachricht für den genannten ersten Dienst bereitstellt,
wobei der genannte erste Dienst Mittel umfasst, um die genannte Bestätigungsnachricht innerhalb einer vorbestimmten Zeitspanne vom genannten zweiten Dienst zu erwarten, und nach Ablauf der genannten vorbestimmten Zeitspanne der genannte erste Dienst Mittel umfasst, um sich selbst als zentrale Softwarekomponente anzugeben.

14. Computerprogramm zur Verteilung eindeutiger Dienstkennungen innerhalb eines Netzwerks (990), wobei das genannte Programm Befehle umfasst, mit denen ein Prozessor (910) dazu veranlasst werden kann,
Diensten zu erlauben unter Verwendung von Kommunikationsschnittstellen, die von einem Netzwerk (990) bereitgestellt werden, miteinander zu kommunizieren, und die genannten Dienste innerhalb des genannten Netzwerks (990) unter Verwendung einer eindeutigen Kennung zu identifizieren,
einen ersten Dienst zu starten,
wobei der genannte erste Dienst als eine Komponente verteilter Software fungiert,
eine Ankündigungsnachricht vom genannten ersten Dienst in das genannte Netzwerk zu übertragen,
die genannte Ankündigungsnachricht zumindest von einem zweiten Dienst zu empfangen,
wobei der genannte zweite Dienst als zentrale Softwarekomponente fungiert, und
den Empfang der genannten Ankündigungsnachricht durch den genannten zweiten Dienst an den genannten ersten Dienst bestätigen zu lassen,
wobei der genannte erste Dienst die genannte Bestätigungsnachricht vom genannten zweiten Dienst innerhalb einer vorbestimmten Zeitspanne erwartet, und nach Ablauf der genannten vorbestimmten Zeitspanne der genannte erste Dienst sich selbst als zentrale Softwarekomponente angibt.

15. Computerprogrammprodukt (100), das das Computerprogramm zur Verteilung eindeutiger Dienstkennungen innerhalb eines Netzwerks (990) nach Anspruch 14 umfasst.

16. System (999) nach Anspruch 13, das eine Vielzahl an Computern (900, 901, 902) umfasst, die zur Verteilung eindeutiger genannter Dienstkennungen innerhalb des Netzwerks (990) installiert werden, wobei auf jedem der zumindest zwei Computer (900, 901, 902) ein Dienst läuft,
wobei mindestens zwei der genannten Dienste miteinander mittels von einem Netzwerk (990) bereitgestellter Kommunikationsschnittstellen kommunizieren, und
wobei jeder der genannten Dienste eine eindeutige Kennung umfasst, die den genannten Dienst innerhalb des genannten Netzwerks (990) identifiziert,
Mit den Schritten:
Start eines ersten Dienstes auf einem ersten Computer (900),
wobei der genannte erste Dienst als eine Komponente verteilter Software fungiert,
Übertragung einer Ankündigungsnachricht durch den genannten ersten Dienst im genannten Netzwerk (990),
Empfang der genannten Ankündigungsnachricht durch mindestens einen zweiten Dienst auf einem zweiten Computer (901, 902),
wobei der genannte zweite Dienst als eine zentrale Softwarekomponente fungiert, und
Empfangsbestätigung der genannten Ankündigungsnachricht durch den genannten zweiten Dienst für den genannten ersten Dienst, und
wobei der genannte erste Dienst die genannte Bestätigungsnachricht vom genannten zweiten Dienst innerhalb einer vorbestimmten Zeitspanne erwartet, und nach Ablauf der genannten vorbestimmten Zeitspanne der genannte erste Dienst sich selbst als zentrale Softwarekomponente angibt.

## Revendications

1. Un procédé pour distribuer des identificateurs uniques de service dans un réseau, sachant qu'au moins deux des services nommés communiquent entre eux en utilisant des interfaces de communication fournies par un réseau, et sachant que chacun des services nommés comprend un identificateur unique identifiant le service nommé à l'intérieur du dit réseau,
présentant les étapes suivantes :
lancement (2) d'un premier service,
sachant que le dit premier service agit en qualité de composant de logiciel distribué, diffusion (6) d'un message d'annonce par le dit premier service dans le dit réseau, réception (12) du dit message d'annonce par au moins un deuxième service, sachant que le dit deuxième service agit en qualité de composant central de logiciel, et
confirmation de réception (14) du dit message d'annonce par le dit deuxième service au dit premier service,
sachant que le dit premier service prête attention à l'arrivée du dit message de confirmation en provenance du dit deuxième service pour une période prédéterminée, et qu'après la fin de cette dite période prédéterminée, le dit premier service s'annonce en tant que composant central de logiciel.

2. Le procédé d'après la revendication 1, le dit premier service diffusant à l'intérieur du dit message d'annonce son identificateur unique, permettant au dit deuxième service de s'adresser directement au dit premier service.

3. Le procédé d'après la revendication 1, le dit deuxième service confirmant la réception du dit message d'annonce au dit premier service en établissant un canal de communication entre le dit premier et le dit deuxième service.

4. Le procédé d'après la revendication 1, le dit deuxième service confirmant la réception du dit message d'annonce au dit premier service en envoyant un message de réseau du dit deuxième service au dit premier service.

5. Le procédé d'après la revendication 1, le dit deuxième service fournissant son identificateur unique au dit premier service tout en confirmant la dite réception du dit message d'annonce.

6. Le procédé d'après la revendication 1, le dit identificateur unique étant attribué au dit premier et au dit deuxième service pendant la mise en marche des dits services, avant la diffusion du dit message d'annonce.

7. Le procédé d'après la revendication 1, le dit deuxième service tenant à jour une liste de tous les composants disponibles du logiciel distribué.

8. Le procédé d'après la revendication 1, le dit premier service demandant au dit deuxième service un identificateur unique pour un troisième service.

9. Le procédé d'après la revendication 1, le dit premier service surveillant l'accessibilité du dit deuxième service et le dit premier service diffusant un message d'annonce au cas où le dit deuxième service n'est pas disponible par son adresse initiale.

10. Le procédé d'après la revendication 1, le dit deuxième service diffusant un nouveau identificateur unique pour informer le dit premier service du nouvel emplacement du dit deuxième service quand le dit deuxième service est transféré.

11. Le procédé d'après la revendication 1, le dit premier service et le dit deuxième service communiquant en utilisant TCP/IP fourni par le dit réseau.

12. Le procédé d'après la revendication 11, le dit identificateur unique étant une adresse TCP/IP.

13. Un système (999) pour distribuer des identificateurs uniques de ses services, comprenant
un premier service comprenant un premier identificateur unique,
un deuxième service comprenant un deuxième identificateur unique,
un réseau (990) offrant des fonctionnalités de communication et
reliant le dit premier service au dit deuxième service,
sachant que le dit premier service agit en qualité de composant de logiciel distribué, et
sachant que le dit deuxième service agit en qualité de composant central de logiciel,
le dit premier service offrant des moyens pour diffuser un message d'annonce, et
le dit deuxième service offrant des moyens pour recevoir le dit message d'annonce et pour confirmer au dit premier service la réception du dit message d'annonce,
sachant que le dit premier service comprend des moyens pour prêter attention à l'arrivée du dit message de confirmation en provenance du dit deuxième service pour une période prédéterminée, et qu'après la fin de cette dite période prédéterminée, le dit premier service comprend des moyens pour s'annoncer en tant que composant central de logiciel.

14. Programme d'ordinateur pour distribuer des identificateurs uniques de service dans un réseau (990), le dit programme comprenant des instructions exploitables pour qu'un processeur (910) permette à des services de communiquer entre eux en utilisant des interfaces de communication fournies par un réseau (990), identifier les dits services dans le dit réseau (990) en utilisant un identificateur unique,
lancer un premier service,
sachant que le dit premier service agit en qualité de composant de logiciel distribué,
diffuser un message d'annonce par le premier service dans le dit réseau,
recevoir le dit message d'annonce par au moins un deuxième service, sachant que le dit deuxième service agit en qualité de composant central de logiciel, et
confirmer la réception du dit message d'annonce par le dit deuxième service au dit premier service,
sachant que le dit premier service prête attention à l'arrivée du dit message de confirmation du dit deuxième service pour une période prédéterminée, et qu'après la fin de cette dite période prédéterminée, le dit premier service s'annonce en tant que composant central de logiciel.

15. Produit programme d'ordinateur (100) comprenant le programme d'ordinateur pour distribuer des identificateurs uniques de service dans un réseau (990) d'après la revendication 14.

16. Le système (999) d'après la revendication 13, comprenant une pluralité d'ordinateurs (900, 901, 902) étant installés pour distribuer les dits identificateurs uniques de service, chacun de ces au moins deux ordinateurs (900, 901, 902) nommés étant en cours d'exécution d'un service,
sachant qu'au moins deux des dits services communiquent entre eux en utilisant des interfaces de communication fournies par un réseau (990), et
sachant que chacun de ces services comprend un identificateur unique identifiant le dit service à l'intérieur du dit réseau (990),
avec les pas suivants :
lancement d'un premier service dans un premier ordinateur (900),
sachant que ce premier service agit en qualité de composant de logiciel distribué,
diffusion d'un message d'annonce par le dit premier service dans le dit réseau (990),
réception du dit message d'annonce par au moins un deuxième service d'un deuxième ordinateur (901, 902),
sachant que le dit deuxième service agit en qualité de composant central de logiciel, et
confirmation de réception du dit message d'annonce par le dit deuxième service au dit premier service, et
sachant que le dit premier service prête attention à l'arrivée du dit message de confirmation en provenance du dit deuxième service pour une période prédéterminée, et qu'après la fin de cette dite période prédéterminée, le dit premier service s'annonce en tant que composant central de logiciel.
